# EUROPÄISCHE PATENTSCHRIFT

(11) **EP 3 369 609 B1**
(45) Veröffentlichungstag und Bekanntmachung des Hinweises auf die Patenterteilung: **31.07.2024**
(21) Anmeldenummer: 18156238.0
(22) Anmeldetag: 12.02.2018
(51) Int. Cl.: B60M 1/30, B60M 1/04

(54) **STROMSCHIENENSYSTEM**
BUSBAR SYSTEM
SYSTÈME DE RAIL CONDUCTEUR

(30) Priorität: 02.03.2017 DE 202017101189 U
(43) Veröffentlichungstag der Anmeldung: 05.09.2018
(73) Patentinhaber: REHAU Industries SE & Co. KG, 95111 Rehau (DE)
(72) Erfinder: Deistler, Thomas, 95158 Kirchenlamitz (DE); Meinel, Udo, 95111 Rehau (DE); Lautenschläger, Heike, 95706 Schirnding (DE)

(56) Entgegenhaltungen:
- WO-A1-00/56569
- DE-U1- 202009 017 145
- DE-U1- 202012 101 576
- US-A- 3 575 576
- US-A- 3 614 340
- US-A- 4 318 462
- US-B1- 7 926 634

## Beschreibung

Die Erfindung betrifft ein Stromschienensystem, umfassend wenigstens eine Stromschiene, wenigstens ein Abdeckelement sowie wenigstens einen Abstandshalter, wobei der Abstandshalter wenigstens ein Rastelement aufweist, welches mit wenigstens einem Klemmelement des Abdeckelementes, diese verbindend, in Wirkverbindung steht, wobei wenigstens ein Trägerelement ein die Stromschiene überdeckendes, von dieser beabstandet angeordnetes, freies Ende aufweist, wobei das freie Ende des Trägerelements der Stromschiene gegenüberliegend angeordnet ist gemäß dem Oberbegriff des Anspruches 1.

Derartige Stromschienensysteme sind im Stand der Technik seit langem bekannt. Ein Stromschienensystem gemäß dem Oberbegriff des Anspruchs 1 ist aus der US 3 614 340 A bekannt.

Weiterhin beschreibt beispielsweise die DE 7 018 332 (U) ein derartiges Stromschienensystem.

Bei diesem Stromschienensystem ist der Abstandshalter als winkelförmiger Hohlkörper ausgebildet, mittels angeformter Nasen durch eine Drehung auf der Stromschiene selbstschließender Riegel ausgestaltet, auf die eine die Verriegelung fixierende Abdeckhaube aus Kunststoff sowie eine seitliche Abdeckplatte aus Kunststoff aufgerastet sind.

Dabei soll die Abdeckhaube mittels angeformter Klemmansätze auf den an den Riegeln angeformten Nasen aufgerastet sein. Die Abstandshalter sind dabei als im Blasverfahren hergestellte Hohlkörper ausgebildet.

Weiterhin offenbart die DE 7 016 606 (U) ein weiteres Stromschienensystem. Dieses Stromschienensystem für Stromschienen mit oberer Stromabnahmefläche weist Stromschienenabdeckungen sowie als Abstandshalter S-förmige selbstschließende Riegel aus Kunststoff auf, die den unteren Teil der hantelförmigen Stromschiene im verriegelten Zustand übergreifende Nase tragen und deren parallele und im verriegelten Zustand parallel zur Stromschiene verlaufenden Seiten mit Klemmnasen versehen sind, auf die seitliche Abdeckplatten aus Kunststoff mittels angeformter Klemmsätze aufgeklemmt sind. Diese Stromschienensysteme haben sich bereits über viele Jahre bewährt und weisen gegenüber Stromschienensystemen, bei denen die Abstandshalter sowie die Abdecksysteme aus Holz oder anderen korrosionsanfälligen Werkstoffen hergestellt sind, entscheidende Vorteile auf.

Im Rahmen der weiteren Entwicklungen sind jedoch die Anforderungen an die Festigkeit der einzelnen Komponenten dieser Stromschienensysteme gestiegen, wobei gleichzeitig insbesondere die erforderlichen Montagezeiten sowie auch die Herstellungskosten reduziert werden müssen.

Bei modernen Stromschienensystemen müssen die einzelnen Komponenten so hergestellt bzw. konstruiert sein, dass sie multifunktional einsetzbar sind, dass die Montage zu allen Jahreszeiten und in allen Klimazonen einfach, schnell und ohne Verwechslungen realisierbar ist, dass die montierten Stromschienensysteme den langjährigen mechanischen, elektrischen sowie temperaturabhängigen Belastungen standhalten und jederzeit schnell sowie reversibel reparierbar bzw. austauschbar sind.

Hier setzt die Erfindung ein, die sich die Aufgabe gestellt hat, die Nachteile des bekannten Standes der Technik zu überwinden und ein Stromschienensystem aufzuzeigen, das kostengünstig und wirtschaftlich herstellbar ist, das eine kompakte Bauweise aufweist, das einfach, unverwechselbar sowie werkzeuglos montierbar bzw. demontierbar ist und einen sicheren sowie störungsfreien Dauerbetrieb ermöglicht.

Erfindungsgemäß wird diese Aufgabe durch die Merkmale des Anspruches 1 gelöst. Weitere vorteilhafte Ausgestaltungen der Erfindung sind in den Unteransprüchen beschrieben.

Es hat sich überraschend herausgestellt, dass ein Stromschienensystem, umfassend wenigstens eine Stromschiene, wenigstens ein Abdeckelement sowie einen Abstandshalter, wobei der Abstandshalter wenigstens ein Rastelement aufweist, welches mit wenigstens einem Klemmelement des Abdeckelements, diese verbindend, in Wirkverbindung steht, wobei wenigstens ein Trägerelement ein die Stromschiene überdeckendes, von dieser beabstandet angeordnetes, freies Ende aufweist, wobei das freie Ende des Trägerelements der Stromschiene gegenüberliegend angeordnet ist, wobei der Abstandshalter durch wenigstens das, über eine Traverse, mit wenigstens einem Halteelement verbundenes, Trägerelement gebildet ist, wobei der Abstandshalter wenigstens eine Fixiervorrichtung aufweist, die wenigstens ein freies Ende des Abdeckelementes und / oder die Stromschiene fixierend übergreift, die eine Basis aufweist, und die über wenigstens ein Fixierelement mit dem Abstandshalter in Wirkverbindung steht, sich dadurch auszeichnet, dass das Halteelement eine Basis aufweist sowie zwei nebeneinander angeordnete Aufnahmeöffnungen, dass an der der Seitenwand der Traverse gegenüberliegend angeordneten Seite des Halteelements zwei Haltestege angeordnet sind, dass die Breite der Fixierstege der Fixiervorrichtung so gewählt ist, dass sie in etwa dem Abstand zwischen Haltesteg des Halteelementes sowie der Seitenwand der Traverse des Abstandshalters entspricht, und dass wenigstens ein Fixierelement am Fixiersteg als Rasthaken ausgebildet ist. Durch diese erfindungsgemäße Ausgestaltung ist es möglich, ein Stromschienensystem zur Verfügung zu stellen, das eine kompakte Bauweise aufweist, das sehr einfach sowie unverwechselbar montierbar ist und bei dem die Montage der Abstandshalter sowie der Abdeckelemente werkzeuglos erfolgt. Das erfindungsgemäße Stromschienensystem erlaubt weiterhin einen sicheren sowie störungsfreien Dauerbetrieb bei seiner bestimmungsgemäßen Verwendung.

Das Stromschienensystem zeichnet sich weiterhin dadurch aus, dass wenigstens ein Halteelement des Abstandshalters wenigstens eine Fixiervorrichtung aufweist, die wenigstens ein freies Ende des Abdeckelementes und / oder die Stromschiene fixierend übergreift und die über wenigstens ein Fixierelement mit dem Halteelement des Abstandshalters in Wirkverbindung steht. Hierdurch ist eine sehr schnelle und werkzeuglose Montage des erfindungsgemäßen Stromschienensystems möglich, wobei auch reparaturbedingte Demontagen dieses erfindungsgemäßen Stromschienensystems unkompliziert und werkzeuglos möglich sind.

Das Stromschienensystem ist weiterhin vorteilhafterweise so ausgebildet, dass das Fixierelement der Fixiervorrichtung an wenigstens einer Aufnahmeöffnung des Halteelements des Abstandshalters rastend hintergreift. Diese Ausgestaltung ermöglicht eine einfache und schnelle Montage der einzelnen Bestandteile des erfindungsgemäßen Stromschienensystems werkzeuglos und auch ohne zusätzliche Befestigungselemente.

In einer ebenfalls vorteilhaften Ausführungsform ist das erfindungsgemäße Stromschienensystem so ausgebildet, dass die Fixiervorrichtung eine Basis aufweist mit wenigstens einem daran angeordneten Arretierelement. Durch diese vorteilhafte Ausführung ist es möglich, das erfindungsgemäße Stromschienensystem so zu montieren, dass die Fixiervorrichtung sowohl an der richtigen Stelle als auch in der richtigen Position angeordnet ist und die jeweiligen Abdeckelemente fixiert.

Ein weiterer Vorteil des erfindungsgemäßen Stromschienensystems besteht darin, dass die Fixiervorrichtung eine Basis mit wenigstens zwei angeordneten Arretierelement aufweist. Vorteilhafterweise sind dabei die Arretierelemente einander gegenüberliegend an der Basis der Fixiervorrichtung angeordnet.

Ein erstes Arretierelement der Fixiervorrichtung ist dabei so angeordnet bzw. positioniert, dass es wenigstens eine Stromschiene fixierend übergreift, während ein zweites Arretierelement der Fixiervorrichtung so angeordnet bzw. positioniert ist, dass es wenigstens ein freies Ende eines Abdeckelementes fixierend übergreift. Neben der kostengünstigen sowie wirtschaftlichen Herstellung insbesondere des Abstandshalters ist es durch diese Ausgestaltung des Stromschienensystems möglich, unterschiedliche Abdeckelemente und / oder Stromschienen mit baugleichen Fixiervorrichtungen werkzeuglos zu montieren, zu fixieren bzw. zu demontieren.

Es hat sich auch als vorteilhaft herausgestellt, dass das Halteelement des Abstandshalters eine Basis mit wenigstens einer Aufnahmeöffnung aufweist. Der Abstandshalter ist dadurch wirtschaftlich und kostengünstig herstellbar. Weiterhin sind durch die Anordnung bzw. die Dimensionierung der Aufnahmeöffnung sowohl unterschiedliche Fixiervorrichtungen als auch unterschiedliche Abdecksysteme und / oder Stromschienen mit dem gleichen Abstandshalter zu einem erfindungsgemäßen Stromschienensystem montierbar.

Ebenfalls vorteilhaft beim erfindungsgemäßen Stromschienensystem ist, dass das Halteelement des Abstandshalters eine Basis mit wenigstens einem Haltesteg aufweist. In dieser vorteilhaften Ausgestaltung ist das erfindungsgemäße Stromschienensystem so ausgebildet, dass die Fixiervorrichtung wenigstens teilweise an wenigstens einem Haltesteg abstützt anliegt.

Es hat sich weiterhin als vorteilhaft herausgestellt, dass der Haltesteg des Halteelementes von der Traverse des Abstandshalters beabstandet angeordnet ist. Hierdurch ist es vorteilhafterweise möglich, dass unterschiedlich dimensionierte Fixiervorrichtungen zwischen dem Haltesteg des Halteelementes sowie der Traverse des Abstandshalters abstützend anordenbar sind. Es liegt auch im Rahmen der Erfindung, dass der Haltesteg des Halteelementes von einer Seitenwand der Traverse des Abstandshalters beabstandet angeordnet ist.

Es hat sich weiterhin als vorteilhaft herausgestellt, dass die Fixiervorrichtung wenigstens einen, an der Basis angeordneten, Fixiersteg aufweist. Hierdurch ist die Fixiervorrichtung des erfindungsgemäßen Stromschienensystems bei der Montage schnell sowie einfach positioniert und werkzeuglos in die Fixierstellung einbringbar.

Ebenfalls als vorteilhaft an sich herausgestellt beim erfindungsgemäßen Stromschienensystem, dass die Fixiervorrichtung wenigstens ein, am Fixiersteg angeordnetes, Fixierelement aufweist. Durch diese vorteilhafte Ausgestaltung ist die Fixiervorrichtung in das Halteelement des Abstandshalters so einbringbar, dass das Fixierelement die Aufnahmeöffnung des Halteelementes hintergreift und das Arretierelement der Fixiervorrichtung das entsprechende Abdeckelement bzw. die Stromschiene fixierend übergreift.

In einer weiteren vorteilhaften Ausgestaltung des erfindungsgemäßen Stromschienensystems ist das am Fixiersteg angeordnete Fixierelement von der Basis der Fixiervorrichtung beabstandet angeordnet. Hierdurch ist eine einfache sowie werkzeuglose Montage der Fixiervorrichtung möglich.

Weiterhin vorteilhaft wird gesehen, dass die Fixiervorrichtung zwei, an der Basis, einander gegenüberliegend angeordnete, Fixierstege aufweist. Das erfindungsgemäße Stromschienensystem ist somit einfach, schnell sowie werkzeuglos montierbar und bei bestimmungsgemäßer Nutzung ist eine mögliche Entrastung wirkungsvoll verhindert.

Dabei ist das erfindungsgemäße Stromschienensystem auch so ausgebildet, dass die Fixiervorrichtung zwei, einander gegenüberliegend, an den Fixierstegen angeordnete, Fixierelemente aufweist. Diese ermöglichen eine höhere Sicherheit bei der Montage bzw. der Fixierung der Abdeckelemente und / oder der Stromschiene des erfindungsgemäßen Stromschienensystems.

Ebenfalls hat sich weiterhin als vorteilhaft bei dem erfindungsgemäßen Stromschienensystem herausgestellt, dass der Abstandshalter wenigstens ein, mit der Stromschiene in Wirkverbindung stehendes Klemmelement aufweist. Hierdurch ist der Abstandshalter auf der Stromschiene des erfindungsgemäßen Stromschienensystems einfach und werkzeuglos anordenbar.

Es hat sich weiterhin als vorteilhaft bei dem erfindungsgemäßen Stromschienensystem herausgestellt, dass wenigstens ein Trägerelement ein das Gleitflächenelement der Stromschiene überdeckendes, von dieser beabstandet angeordnetes, freies Ende aufweist und dass das freie Ende des Trägerelements dem Gleitflächenelement der Stromschiene gegenüberliegend angeordnet ist. Hierdurch ist das erfindungsgemäße Stromschienensystem bei bestimmungsgemäßer Nutzung für verschieden dimensionierte Stromschienen einsetzbar, ohne zusätzliche Abdeckelemente bzw. Abstandshalter einsetzen zu müssen.

Das erfindungsgemäße Stromschienensystem weist weiterhin den Vorteil auf, dass das Klemmelement des Abdeckelementes wenigstens ein Rastelement des Abstandshalters rastend hintergreift. Das erfindungsgemäße Stromschienensystem ist somit sehr schnell und effizient montierbar, ohne dass zusätzliche Werkzeuge bzw. Befestigungselemente erforderlich sind und bei bestimmungsgemäßer Verwendung des erfindungsgemäßen Stromschienensystems ist ein störungsfreier Dauerbetrieb möglich, da insbesondere das Abdeckelement die Stromschiene sichernd überdeckt.

Ebenfalls vorteilhaft beim erfindungsgemäßen Stromschienensystem ist, dass die Traverse und / oder das Trägerelement im Querschnitt etwa Doppel-T-förmig ausgebildet ist. Durch diese geometrische Dimensionierung ist das erfindungsgemäße Stromschienensystem den Anforderungen an einen störungsfreien Dauerbetrieb hinsichtlich der Festigkeit sowie der Stabilisierung insbesondere der auf der Stromschiene angeordneten Abstandshalter mit den daran fixierten Abdeckungselementen wirkungsvoll dimensioniert bzw. anpassbar.

Ein weiterer Vorteil des erfindungsgemäßen Stromschienensystems ist, dass die Basis des Halteelements über die Traverse einstückig mit dem Abstandshalter verbunden ist.

Hierdurch ist insbesondere der Abstandshalter des erfindungsgemäßen Stromschienensystems kostengünstig und wirtschaftlich herstellbar.

Das erfindungsgemäße Stromschienensystem ist vorteilhafterweise so ausgebildet, dass wenigstens eine Fixiervorrichtung über das Abdeckelement vom Abstandshalter beabstandet angeordnet ist.

Weiterhin ist das Stromschienensystem so ausgebildet, dass wenigstens eine Fixiervorrichtung an der, der Stromschiene gegenüberliegend angeordneten, Außenseite des Abstandshalters über das Abdeckelement beabstandet angeordnet ist.

Das erfindungsgemäße Stromschienensystem ist weiterhin vorteilhafterweise so ausgebildet, dass sowohl der Abstandshalter als auch die Fixiervorrichtung sowie das Abdeckelement einfach dimensionierbare Teile sind und beispielsweise aus polymeren und / oder duromeren Materialien herstellbar sind.

Unter polymeren Materialien sind Materialien wie Polyvinylchlorid (PVC); Polyolefin, wie Polypropylen (PP) oder Polyethylen (PE); styrolbasiertes Polymer, wie Polystyrol (PS) oder Styrol-Butadien-Copolymer mit überwiegendem Styrolanteil (SB) oder Acrylnitril-Styrol-Acrylester-Copolymere (ASA) oder Acrylnitril-Butadien-Styrol-Copolymere (ABS) oder Styrolacrylnitril (SAN); Polybutylentherephthalat (PBT); Polyethylentherephthalat (PET); Polyoxymethylen (POM); Polyamid (PA); Polymethylmethacrylat (PMMA); Polyphenylenoxid (PPO); Polyetheretherketon (PEEK); Polyphenylensulfid (PPS); Liquid Crystal Polymer (LCP); Polyamidimide (PAI); Polyvinylidenfluorid (PVDF); Polyphenylsulfon (PPSU); Polyaryletherketon (PAEK); Polyacrylnitril (PAN); Polychlortrifluorethylen (PCTFE); Polyetherketon (PEK); Polyimid (PI); Polyisobuten (PIB); Polyphthalamid (PPA); Polypyrrol (PPY); Polytetrafluorethylen (PTFE); Polyurethan (PUR); Polyvinylalkohol (PVA); Polyvinylacetat (PVAC); Polyvinylidenchlorid (PVDC); sowie Mischungen aus wenigstens zwei dieser Materialien gemeint.

Dabei können dem polymeren Werkstoff geeignete Füll- und / oder Verstärkungsstoffe beigemischt sein, in einer Menge von etwa 5 bis 40 Gew.- %, bevorzugt 10 bis 30 Gew.- %, die die mechanischen Eigenschaften positiv beeinflussen insbesondere Glasfasern, Glaskugeln aber auch Füllstoffe wie Kreide, Teflon und dergleichen.

Ebenfalls vorteilhaft bei dem erfindungsgemäßen Stromschienensystem ist, dass der Abstandshalter als Formteil im an sich bekannten Spritzgießverfahren kostengünstig und wirtschaftlich herstellbar ist.

Es liegt jedoch auch im Rahmen der Erfindung, dass der Abstandshalter des erfindungsgemäßen Stromschienensystems als Profil ausgebildet und im an sich bekannten Extrusionsverfahren herstellbar ist.

Hierzu sind die jeweiligen Fixiervorrichtungen der entsprechenden Geometrie, insbesondere der Breite des Abstandshalters, des Stromschienensystems anzupassen. Die Erfindung soll nun an diesen nicht einschränkenden Ausführungsbeispielen näher beschrieben werden.

Es zeigen:
- Fig.1:: Vorderansicht eines erfindungsgemäßen Stromschienensystems;
- Fig. 2:: Vorderansicht eines weiteren erfindungsgemäßen Stromschienensystems;
- Fig. 3:: perspektivische Darstellung eines Abstandshalters des erfindungsgemäßen Stromschienensystems;
- Fig. 4:: perspektivische Darstellung einer Fixiervorrichtung des erfindungsgemäßen Stromschienensystems.

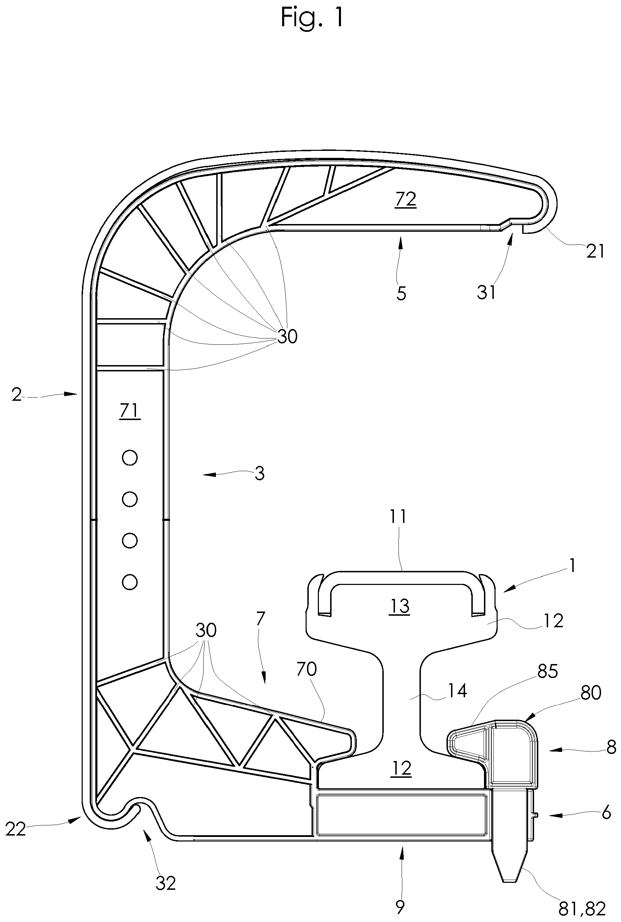

In der Fig. 1 ist eine Vorderansicht eines erfindungsgemäßen Stromschienensystems dargestellt.

Das Stromschienensystem umfasst wenigstens eine Stromschiene 1, wenigstens ein Abdeckelement 2 sowie wenigstens einen Abstandshalter 3.

Der Abstandshalter 3 ist so ausgebildet, dass er durch wenigstens ein, über eine Traverse 4, 9 mit wenigstens einem Halteelement 6 verbundenes, Trägerelement 7 gebildet ist. Der Abstandshalter 3 weist wenigstens ein Rastelement 31, 32 auf, welches mit wenigstens einem Klemmelement 21, 22 des Abdeckelements 2, diese verbindend, in Wirkverbindung steht.

Wenigstens ein Trägerelement 7 weist ein, die Stromschiene 1 überdeckendes, von dieser beabstandet angeordnetes, freies Ende 5 auf, wobei das freie Ende 5 des Trägerelements 7 der Stromschiene 1 gegenüberliegend angeordnet ist.

Das Stromschienensystem ist so ausgebildet, dass der Abstandshalter 3 wenigstens eine Fixiervorrichtung 8 aufweist, die die Stromschiene 1 fixierend übergreift und die über wenigstens ein, nicht dargestelltes, Fixierelement 83, 84 mit dem Abstandshalter 3 in Wirkverbindung steht.

Das Stromschienensystem ist weiterhin so ausgebildet, dass ein Halteelement 6 des Abstandshalters 3 wenigstens eine Fixiervorrichtung 8 aufweist, die die Stromschiene 1 fixierend übergreift und die über ein nicht dargestelltes Fixierelement mit dem Halteelement 6 des Abstandshalters 3 in Wirkverbindung steht.

Der Abstandshalter 3 ist ebenfalls so ausgebildet, dass er ein Trägerelement 7 aufweist, welches über eine Traverse 9 mit einem Halteelement 6 verbunden ist.

Der Abstandshalter 3 ist weiter so ausgebildet, dass er ein erstes Trägerteil 71 sowie ein zweites Trägerteil 72 aufweist, welche etwa orthogonal zueinander angeordnet sind.

Das Trägerelement 7 des Abstandshalters 3 ist dabei so ausgebildet, dass es im Querschnitt etwa Doppel-T-förmig ausgebildet ist und Verstärkungselemente 30 aufweist.

An dem die Stromschiene 1 überdeckenden freien Ende 5 des Trägerelementes 7 des Abstandshalters 3 ist ein erstes Rastelement 31 angeordnet.

An dem, dem freien Ende 5 des Trägerelements 7 des Abstandshalters 3 gegenüberliegend angeordneten, freien Ende weist das Trägerelement 7 des Abstandshalters 3 ein zweites Rastelement 32 auf.

In diesem Ausführungsbeispiel ist an der, der Stromschiene 1 abgewandten, Außenseite des Abstandshalters 3 ein Abdeckelement 2 angeordnet.

Das Abdeckelement 2 weist an seinen freien Enden jeweils ein erstes Klemmelement 21 sowie ein zweites Klemmelement 22 auf.

Das Stromschienensystem ist weiterhin so ausgebildet, dass das Klemmelement 21, 22 des Abdeckelements 2 wenigstens ein Rastelement 31, 32 des Abstandshalters 3 rastend h interg reift.

Das Stromschienensystem ist weiter so ausgebildet, dass auf der, das Trägerelement 7 mit dem Halteelement 6 verbindenden, Traverse 9 eine Stromschiene 1 angeordnet ist.

Die Stromschiene 1 ist so ausgebildet, dass sie ein Basisprofil 12 aufweist, welches einen Profilfuß 12, einen Profilkopf 13 sowie einen diese verbindenden Profilsteg 14 aufweist.

An der dem Profilfuß 12 der Stromschiene 1 gegenüberliegenden Ende ist ein Gleitflächenelement 11 im Profilkopf 13 angeordnet.

Das Gleitflächenelement 11 der Stromschiene 1 ist dabei direkt gegenüberliegend dem freien Ende 5 des Trägerelements 7 des Abstandshalters 3 angeordnet.

Das freie Ende 5 des Trägerelements 7 des Abstandshalters 3 überdeckt somit die Stromschiene 1.

Das Trägerelement 7 des Abstandshalters 3 weist ein Klemmelement 70 auf, welches den Profilfuß 12 der Stromschiene 1 fixierend übergreift. Der Profilfuß 12 der Stromschiene 1 ist so ausgebildet, dass seine Breite etwa der Breite der Traverse 9 des Abstandshalters 3 entspricht.

An der Traverse 9 des Abstandshalters 3 ist ein Halteelement 6 angeordnet, an dem eine Fixiervorrichtung 8 positioniert ist.

Die Fixiervorrichtung 8 ist so ausgebildet, dass sie wenigstens ein Arretierelement 85 aufweist, welches die Stromschiene 1 fixierend übergreift.

Die Fixiervorrichtung 8 steht dabei über wenigstens ein, nicht dargestelltes, Fixierelement mit dem Abstandshalter 3 in Wirkverbindung.

In diesem Ausführungsbeispiel ist das Stromschienensystem so ausgebildet, dass ein Halteelement 6 des Abstandshalters 3 wenigstens eine Fixiervorrichtung 8 aufweist, die den Profilfuß 12 der Stromschiene 1 fixierend übergreift.

Das erfindungsgemäße Stromschienensystem in diesem Ausführungsbeispiel weist somit eine kompakte Bauweise auf, insbesondere durch die Geometrie des Abstandshalters 3 sowie des daran werkzeuglos montierbaren und ohne zusätzliche Befestigungselemente fixierten Abdeckelementes 2.

Weiterhin ist das erfindungsgemäße Stromschienensystem in diesem Ausführungsbeispiel einfach, unverwechselbar sowie werkzeuglos montierbar bzw. demontierbar, da insbesondere die Fixiervorrichtung 8 und das Klemmelement 70 des Trägerelements 7 des Abstandshalters 3 die Stromschiene 1 fixierend übergreift.

In diesem Ausführungsbeispiel ist das erfindungsgemäße Stromschienensystem bei bestimmungsgemäßer Nutzung permanent in einem sicheren sowie störungsfreien Dauerbetrieb realisierbar.

Der Abstandshalter 3 sowie das daran angeordnete Abdeckelement 2 sind dabei aus einem polymeren Werkstoff hergestellt. In diesem Ausführungsbeispiel besteht der Abstandshalter 3 aus einem Polyamid (PA) und das Abdeckelement 2 aus einem Polyvinylchlorid (PVC), beide sind somit korrosionsbeständig und überdecken die, aus einem metallischen Werkstoff hergestellte, Stromschiene 1 wirksam.

Die Fixiervorrichtung 8 ist dabei so ausgebildet, dass sie eine Basis 80 aufweist mit wenigstens einem daran angeordneten Arretierelement 85, welches in diesem Ausführungsbeispiel den Profilfuß 12 der Stromschiene 1 fixierend übergreift.

Die Fixiervorrichtung 8 weist weiterhin wenigstens einen, an der Basis 80 angeordneten, Fixiersteg 81, 82 auf. Der Fixiersteg 81, 82 der Fixiervorrichtung 8 weist wenigstens ein, hier nicht sichtbar dargestelltes, Fixierelement 83, 84 auf.

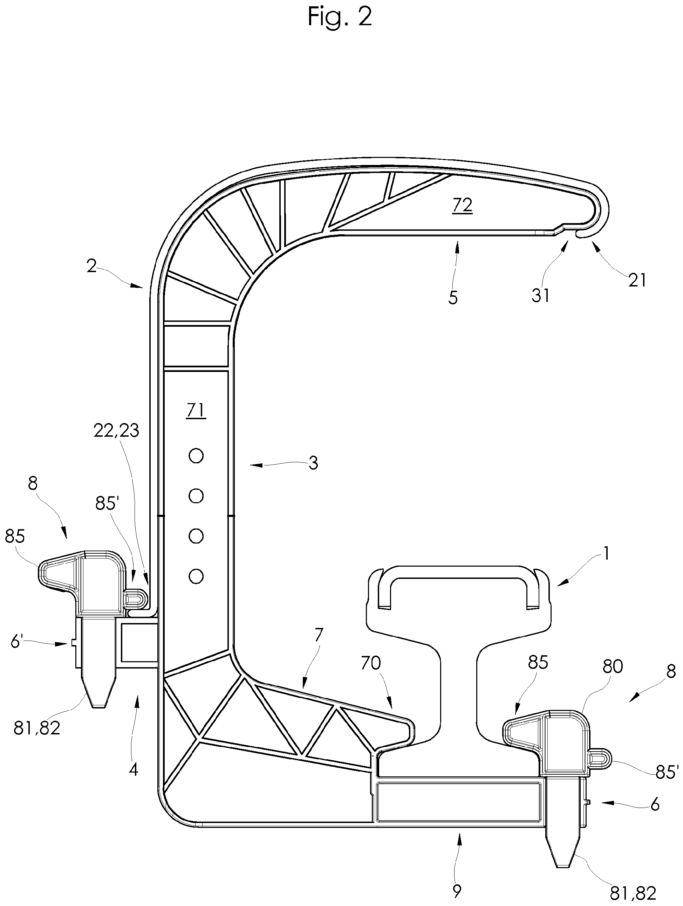

In der Fig. 2 ist eine Vorderansicht eines weiteren erfindungsgemäßen Stromschienensystems dargestellt.

Das Stromschienensystem umfasst eine Stromschiene 1, ein Abdeckelement 2 sowie einen Abstandshalter 3.

Der Abstandshalter ist durch wenigstens ein, über eine Traverse 4, 9 mit wenigstens einem Halteelement 6, 6' verbundenes, Trägerelement 7 gebildet.

Der Abstandshalter 3 weist weiterhin ein Rastelement 31 auf, welches mit einem Klemmelement 21 des Abdeckelements 2, diese verbindend, in Wirkverbindung steht.

Das Stromschienensystem ist weiterhin so ausgebildet, dass der Abstandshalter 3 über wenigstens ein Trägerelement 7 ein die Stromschiene 1 überdeckendes, von dieser beabstandet angeordnetes, freies Ende 5 aufweist, wobei das freie Ende 5 des Trägerelements 7 der Stromschiene 1 gegenüberliegend angeordnet ist.

Der Abstandshalter 3 ist in diesem Ausführungsbeispiel so ausgebildet, dass er an seiner dem freien Ende 5 gegenüberliegend angeordneten freien Ende über eine Traverse 9 mit einem ersten Halteelement 6 verbunden ist.

Weiterhin weist der Abstandshalter 3 an seiner der Stromschiene abgewandten Außenseite ein über eine Traverse 4 angeordnetes zweites Halteelement 6' auf.

Der Abstandshalter 3 des Stromschienensystems weist in diesem Ausführungsbeispiel eine Fixiervorrichtung 8 auf, die wenigstens ein freies Ende 23 des Abdeckelementes 2 fixierend übergreift. Weiterhin weist der Abstandshalter 3 des Stromschienensystems in diesem Ausführungsbeispiel eine weitere, baugleiche Fixiervorrichtung 8 auf, welche die Stromschiene 1 fixierend übergreift.

Die Fixiervorrichtung 8 ist dabei so ausgebildet, dass sie eine Basis 80 aufweist, an der jeweils ein Arretierelement 85, 85' angeordnet ist.

In diesem Ausführungsbeispiel weist die Basis 80 der Fixiervorrichtung 8 zwei, einander gegenüberliegend angeordnete, Arretierelemente 85, 85' auf.

Durch diese vorteilhafte Ausgestaltung des erfindungsgemäßen Stromschienensystems ist es somit möglich, mit der Fixiervorrichtung 8 einerseits das freie Ende 23 des Abdeckelements 2 mit einem ersten Arretierelement 85 fixierend zu übergreifen und durch die eine weitere, baugleiche Fixiervorrichtung 8 über das zweite Fixierelement 85' die Stromschiene 1 fixierend zu übergreifen.

Dabei ist die Fixiervorrichtung 8 so ausgebildet, dass sie über wenigstens ein, hier nicht dargestelltes Fixierelement 83, 84 mit dem Abstandshalter 3 in Wirkverbindung steht.

Der Abstandshalter 3 ist weiterhin so ausgebildet, dass er an seinem freien Ende 5 ein Rastelement 31 aufweist, welches mit dem Klemmelement 21 des Abdeckelementes 2 in Wirkverbindung steht.

Weiterhin ist der Abstandshalter 3 des Stromschienensystems so ausgebildet, dass er ein Trägerelement 7 aufweist, welches ein erstes Trägerteil 71 sowie ein zweites Trägerteil 72 aufweist. Diese sind etwa orthogonal zueinander angeordnet und einstückig verbunden.

Der Abstandshalter 3 des Stromschienensystems weist wenigstens ein, mit der Stromschiene 1 in Wirkverbindung stehendes, Klemmelement 70 auf.

Das Klemmelement 70 des Trägerelementes 7 des Abstandshalters 3 ist in diesem Ausführungsbeispiel gegenüberliegend zum ersten Arretierelement 85 der Fixiervorrichtung 8 angeordnet.

Die Fixiervorrichtung 8 ist so ausgebildet, dass sie wenigstens einen, an der Basis 80 angeordneten, Fixiersteg 81, 82 aufweist. Der Fixiersteg 81, 82 der Fixiervorrichtung 8' steht mit wenigstens einem Halteelement 6, 6' in Wirkverbindung.

Das Halteelement 6, 6' ist über eine Traverse 4, 9 vom Trägerelement 7 des Abstandshalters 3 beabstandet angeordnet.

Die Traverse 4, 9 sowie das Trägerelement 7 sind im Querschnitt etwa Doppel-T-förmig ausgebildet.

Die Fixiervorrichtung 8 ist so ausgebildet, dass sie wenigstens ein, am Fixiersteg 81, 82 angeordnetes, hier nicht sichtbares, Fixierelement aufweist.

Die Fixiervorrichtung 8 ist über wenigstens ein, hier nicht sichtbares, Fixierelement mit dem Abstandshalter 3 in Wirkverbindung stehend, angeordnet.

In diesem Ausführungsbeispiel ist die Fixiervorrichtung 8 über wenigstens ein, hier nicht dargestelltes, Fixierelement mit dem Halteelement 6, 6' des Abstandshalters 3 in Wirkverbindung stehend, angeordnet.

Das Stromschienensystem in diesem Ausführungsbeispiel zeichnet sich somit dadurch aus, dass es in einer kompakten Bauweise kostengünstig und wirtschaftlich herstellbar ist, dass es einfach, unverwechselbar sowie werkzeuglos montierbar bzw. demontierbar ist und einen sicheren, sowie störungsfreien Dauerbetrieb ermöglicht.

Das erfindungsgemäße Stromschienensystem ist weiterhin so ausgebildet, dass die Fixiervorrichtung 8 an der Basis 80 zwei jeweils einander gegenüberliegend angeordnete Arretierelemente 85, 85' aufweist, die so angeordnet und dimensioniert sind, dass sie wenigstens ein freies Ende 23 des Abdeckelementes 2 und / oder die Stromschiene 1 fixierend übergreifen.

Das Stromschienensystem ist in diesem Ausführungsbeispiel so ausgebildet, dass das Klemmelement 21 des Abdeckelements 2 das am freien Ende 5 des Abstandshalters 3 angeordnete Rastelement 31 rastend hintergreift.

Somit ist sowohl der Abstandshalter 3 an der Stromschiene 1 über eine Fixiervorrichtung 8 als auch das Abdeckelement 2 über eine weitere, baugleiche Fixiervorrichtung 8 am Abstandshalter 3 montierbar, fixierbar sowie auch demontiebar.

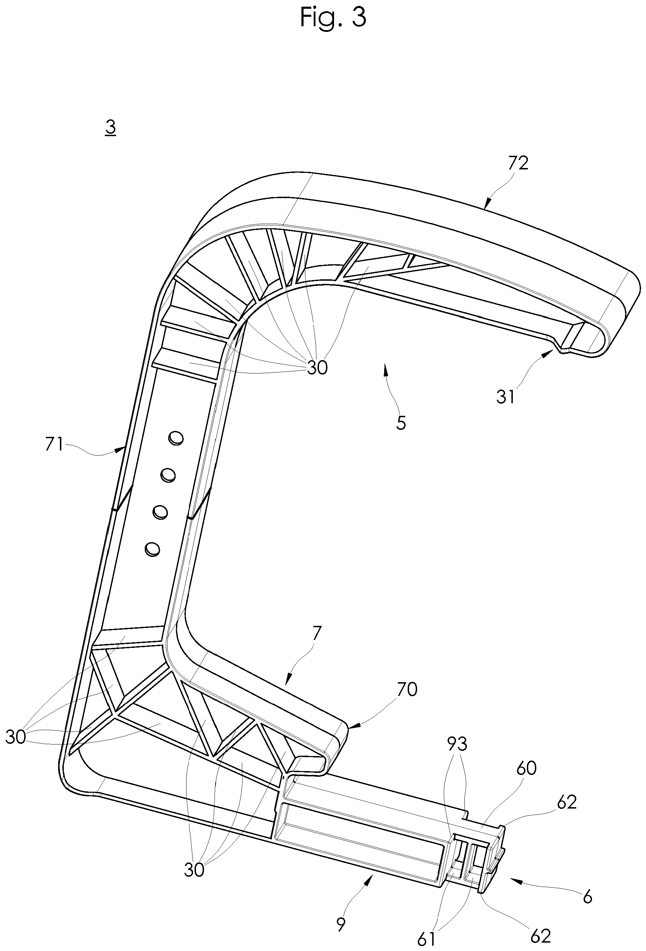

In der Fig. 3 ist eine perspektivische Darstellung eines Abstandshalters des erfindungsgemäßen Stromschienensystems dargestellt.

Der Abstandshalter 3 ist durch ein, über eine Traverse 9, mit einem Halteelement 6 verbundenes, Trägerelement 7 gebildet.

Das Trägerelement 7 des Abstandshalters 3 weist jeweils ein erstes Trägerteil 71 sowie ein zweites Trägerteil 72 auf.

In diesem Ausführungsbeispiel ist das erste Trägerteil 71 einstückig mit dem zweiten Trägerteil 72 verbunden. Das zweite Trägerteil 72 ist etwa orthogonal zum ersten Trägerteil 71 des Trägerelements 7 angeordnet.

Der Abstandshalter 3 ist so ausgebildet, dass er ein freies Ende 5 aufweist, an dem ein Rastelement 31 angeordnet ist.

Der Abstandshalter 3 weist wenigstens ein mit einer, nicht dargestellten, Stromschiene in Wirkverbindung zu bringendes Klemmelement 70 auf.

An der Traverse 9 des Abstandshalters 3 ist ein Halteelement 6 angeordnet. Das Halteelement 6 ist dabei einstückig mit der Traverse 9 des Abstandshalters 3 verbunden.

Das Halteelement 6 weist eine Basis 60 auf sowie in diesem Ausführungsbeispiel zwei nebeneinander angeordnete Aufnahmeöffnungen 61.

An der der Seitenwand 93 der Traverse 9 gegenüberliegend angeordneten Seite des Halteelements 6 sind zwei Haltestege 62 angeordnet.

Bei bestimmungsgemäßer Verwendung des Abstandshalters 3 für das erfindungsgemäße Stromschienensystem wird die nicht dargestellte Stromschiene auf der Traverse 9 so angeordnet, dass das Klemmelement 70 die Stromschiene fixierend übergreift.

Die Fixiervorrichtung wird dabei so zwischen der Seitenwand 93 der Traverse 9 und dem Haltesteg 62 des Halteelements 6 eingeführt, dass die Basis 80 der nicht dargestellten Fixiervorrichtung auf der Oberseite der Basis 60 des Halteelements aufliegt und über das nicht dargestellte Arretierelement die Stromschiene fixierend übergreift.

Der Abstandshalter 3 des Stromschienensystems ist weiterhin so ausgebildet, dass die Traverse 9 sowie das Trägerelement 7 im Querschnitt etwa Doppel-T-förmig ausgebildet sind.

In diesem Ausführungsbeispiel weist das Trägerelement 7 des Abstandshalters 3 an geeigneten Positionen Verstärkungselemente 30 auf, welche die Stabilität des Abstandshalters 3 und somit des Stromschienensystems verbessern.

Der Abstandshalter 3 ist in diesem Ausführungsbeispiel aus einem polymeren Werkstoff hergestellt, aus einem Polyamid (PA) mit einem Anteil von etwa 30 Gew.-% Verstärkungsstoffe, in diesem Ausführungsbeispiel Glasfasern.

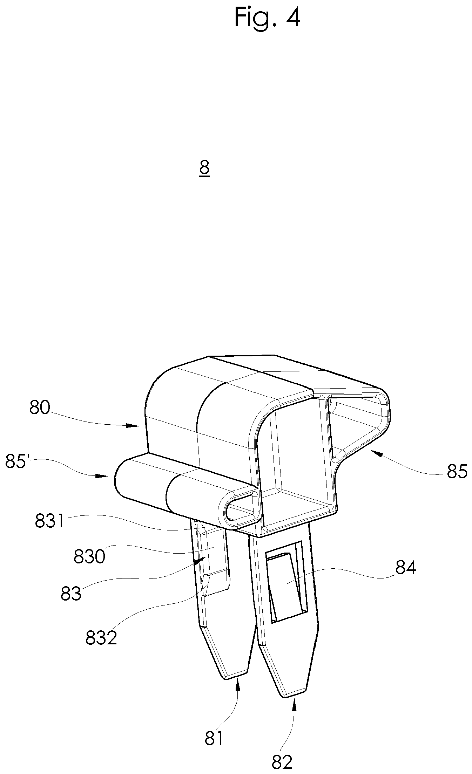

In der Fig. 4 ist eine perspektivische Darstellung einer Fixiervorrichtung 8 des erfindungsgemäßen Stromschienensystems dargestellt.

Die Fixiervorrichtung 8 weist eine Basis 80 mit wenigstens einem daran angeordneten Arretierelement 85, 85' auf.

In diesem Ausführungsbeispiel ist die Fixiervorrichtung 8 so ausgebildet, dass an der Basis 80 zwei Arretierelemente 85, 85' angeordnet sind. Die Arretierelemente 85, 85' der Fixiervorrichtung 8 sind dabei einander gegenüberliegend an der Basis 80 angeordnet.

Bei bestimmungsgemäßem Einsatz der Fixiervorrichtung 8 des erfindungsgemäßen Stromschienensystems übergreift das erste Arretierelement 85 die Stromschiene.

Das zweite Arretierelement 85' der Fixiervorrichtung 8 ist so dimensioniert und positioniert, das es wenigstens ein freies Ende des Abdeckelementes fixierend übergreift.

Die Fixiervorrichtung 8 des erfindungsgemäßen Stromschienensystems ist dabei so ausgebildet, dass diese nur um 180° versetzt im jeweiligen Halteelement des Abstandshalters ein freies Ende des Abdeckelementes und / oder die Stromschiene fixierend übergreifend, anordenbar ist.

Die Fixiervorrichtung 8 ist weiterhin so ausgebildet, dass sie wenigstens einen, an der Basis 80 angeordneten Fixiersteg 81, 82 aufweist.

In diesem Ausführungsbeispiel ist die Fixiervorrichtung 8 des erfindungsgemäßen Stromschienensystems so ausgebildet, dass sie zwei, an der Basis 80, einander gegenüberliegend angeordnete, Fixierstege 81, 82 aufweist.

Die Breite der Fixierstege 81, 82 der Fixiervorrichtung 8 ist so gewählt, dass sie in etwa dem Abstand zwischen dem Haltesteg 6 des Halteelements 6 sowie der Seitenwand 63 der Traverse 64 des nicht dargestellten Abstandshalters entspricht.

Die Fixiervorrichtung 8 ist weiterhin so ausgebildet, dass sie zwei, einander gegenüberliegend, an den Fixierstegen 81, 82 angeordnete, Fixierelemente 83, 84 aufweist. In diesem Ausführungsbeispiel ist ein erstes Fixierelement 83 am ersten Fixiersteg 81 so ausgebildet, dass es eine Basis 830 aufweist an deren freien Enden jeweils eine Anlaufschräge 831, 832 angeordnet ist.

Das zweite Fixierelement 84 am zweiten Fixiersteg 82 ist in diesem Ausführungsbeispiel als Rasthaken ausgebildet.

Die Fixiervorrichtung 8 ist weiter so ausgebildet, dass das am Fixiersteg 81, 82 angeordnete Fixierelement 83, 84 von der Basis 80 beabstandet angeordnet ist.

Die Fixiervorrichtung 8 ist in diesem Ausführungsbeispiel aus einem polymeren Werkstoff hergestellt, aus einem Polyamid (PA).

Bei bestimmungsgemäßem Einsatz des erfindungsgemäßen Stromschienensystems ist die Fixiervorrichtung 8 so am Halteelement 6 des Abstandshalters 3 angeordnet, dass das Fixierelement 83, 84 an der Aufnahmeöffnung 61 des Halteelements 6 rastend hintergreift.

## Patentansprüche

1. Stromschienensystem, umfassend wenigstens eine Stromschiene (1), wenigstens ein Abdeckelement (2), sowie wenigstens einen Abstandshalter (3), zum von der Stromschiene (1) beabstandeten Halten des Abdeckelementes (2), wobei der Abstandhalter (3) wenigstens ein Rastelement (31, 32) aufweist, welches mit wenigstens einem Klemmelement (21, 22) des Abdeckelements (2), diese verbindend, in Wirkverbindung steht, wobei ein Trägerelement (7) ein die Stromschiene (1) überdeckendes, von dieser beabstandet angeordnetes, freies Ende (5) aufweist, wobei das freie Ende (5) des Trägerelementes (7) der Stromschiene (1) gegenüberliegend angeordnet ist, wobei der Abstandshalter (3) durch das, über eine Traverse (4, 9), mit einem Halteelement (6, 6') verbundenes, Trägerelement (7) gebildet ist, wobei der Abstandshalter (3) eine Fixiervorrichtung (8) aufweist, die wenigstens ein freies Ende (23) des Abdeckelementes (2) und /oder die Stromschiene (1) fixierend übergreift, die eine Basis (80) aufweist, und die über wenigstens ein Fixierelement (83, 84) mit dem Abstandshalter (3) in Wirkverbindung steht, wobei die Fixiervorrichtung (8) zwei, an der Basis (80), einander gegenüberliegend angeordnete, Fixierstege (81, 82) aufweist, wobei die Fixiervorrichtung (8) zwei, einander gegenüberliegend, an den Fixierstegen (81, 82) angeordnete, Fixierelemente (83, 84) aufweist, die wenigstens eine Aufnahmeöffnung (61) des Halteelementes (6, 6') des Abstandshalters (3) rastend hintergreifen, **dadurch gekennzeichnet, dass** das Halteelement (6) eine Basis (60) aufweist sowie zwei nebeneinander angeordnete Aufnahmeöffnungen (61), dass an der der Seitenwand (93) der Traverse (9) gegenüberliegend angeordneten Seite des Halteelements (6) zwei Haltestege (62) angeordnet sind, dass die Breite der Fixierstege (81, 82) der Fixiervorrichtung (8) so gewählt ist, dass sie in etwa dem Abstand zwischen Haltesteg (62) des Halteelementes (6, 6') sowie der Seitenwand (63) der Traverse (64) des Abstandshalters (3) entspricht, und dass eines der Fixierelemente (84) an einem der Fixierstege (81,82) als Rasthaken ausgebildet ist.

2. Stromschienensystem nach Anspruch 1, **dadurch gekennzeichnet, dass** der Abstandshalter (3), die Fixiervorrichtung (8) sowie das Abdeckelement (2) aus polymeren und/oder duromeren Materialien hergestellt sind.

3. Stromschienensystem nach einem der vorhergehenden Ansprüche, **dadurch gekennzeichnet, dass** die Fixiervorrichtung (8) so ausgebildet ist, dass das am Fixiersteg (81, 82) angeordnete Fixierelement (83, 84) von der Basis (80) beabstandet angeordnet ist.

4. Stromschienensystem nach einem der vorhergehenden Ansprüche, **dadurch gekennzeichnet, dass** ein erstes Fixierelement (83) am ersten Fixiersteg (81) der Fixiervorrichtung (8) so ausgebildet ist, dass es eine Basis (830) aufweist, an deren freien Ende jeweils eine Anlaufschräge (831, 832) angeordnet ist.

5. Stromschienensystem nach einem der vorhergehenden Ansprüche, **dadurch gekennzeichnet, dass** wenigstens ein Trägerelement (7) ein das Gleitflächenelement (11) der Stromschiene (1) überdeckendes, von dieser beabstandet angeordnetes, freies Ende (5) aufweist und dass das freie Ende (5) des Trägerelementes (7) dem Gleitflächenelement (11) der Stromschiene (1) gegenüberliegend angeordnet ist.

6. Stromschienensystem nach einem der vorhergehenden Ansprüche, **dadurch gekennzeichnet, dass** das Klemmelement (21, 22) des Abdeckelementes (2) wenigstens ein Rastelement (31, 32) des Abstandshalters (3) rastend hintergreift.

7. Stromschienensystem nach einem der vorhergehenden Ansprüche, **dadurch gekennzeichnet, dass** die Traverse (4, 9) und / oder das Trägerelement (7) im Querschnitt etwa Doppel-T-förmig ausgebildet ist.

## Claims

1. Busbar system, comprising at least one busbar (1), at least one cover element (2) and at least one spacer (3) for holding the cover element (2) spaced from the busbar (1), wherein the spacer (3) comprises at least one latching element (31, 32) which is engaged with at least one clamping element (21, 22) of the cover element (2) while connecting them, wherein a support element (7) comprises a free end (5) arranged at a distance to the busbar (1) and covering it, wherein the free end (5) of the support element (7) is arranged opposite to the busbar (1), wherein the spacer (3) is formed by a support element (7) connected to a retaining element (6, 6') via a crossbeam (4, 9), wherein the spacer (3) comprises a fixing device (8) which engages beyond at least one free end (23) of the cover element (2) and/or the busbar (1) in a fixing manner and which comprises a base (80) and which is engaged with the spacer (3) via at least one fixing element (83, 84), wherein the fixing device (8) comprises two fixing elements (83, 84) arranged oppositely to one another on the fixing webs (81, 82), wherein the fixing device (8) comprises two fixing elements (83, 84) arranged on the fixing webs (81, 82) which engage behind a receiving opening (61) of the retaining element (6, 6') if the spacer (3) in a latching manner, **characterized in that** the retaining element (6) comprises a base (60) and two receiving openings (61) arranged side by side, **in that** two fixing webs (62) are arranged on the side of the retaining element (6) arranged opposite to the sidewall (93) of the crossbeam (9), that the width of the fixing webs (81, 82) of the retaining device (8) is selected to approximately correspond to the distance between the retaining web (62) of the retaining element (6, 6) as well as the sidewall (63) of the crossbeam (64) of the spacer (3), and that one of the fixing elements (84) is formed as a latching hook on one of the fixing webs (81, 82).

2. Busbar system according to claim 1, **characterized in that** the spacer (3), the fixing device (8) and the cover element (2) are made of polymeric and/or thermosetting materials.

3. Busbar system according to any one of the preceding claims, **characterized in that** the fixing device (8) is formed in such a way that the fixing element (83, 84) arranged on the fixing web (81, 82) is arranged at a distance from the base (80).

4. Busbar system according to any one of the preceding claims, **characterized in that** a first fixing element (83) is formed at the first fixing web (81) of the fixing device (8) in such a way that it comprises a base (830) at the free end of which a ramping slope (831, 832) is arranged in each case.

5. Busbar system according to any one of the preceding claims, **characterized in that** at least one support element (7) comprises a free end (5) covering the sliding surface element (11) of the busbar (1) and arranged at a distance thereto and that the free end (5) of the support element (7) is arranged opposite the sliding surface element (11) of the busbar (1).

6. Busbar system according to any one of the preceding claims, **characterized in that** the clamping element (21, 22) of the cover element (2) latchingly engages behind at least one latching element (31, 32) of the spacer (3).

7. Busbar system according to any one of the preceding claims, **characterized in that** the cross-section of the crossbeam (4, 9) and/or the support element (7) is approximately configured in the shape of a double-T.

## Revendications

1. Système de rail conducteur, comprenant au moins un rail conducteur (1), au moins un élément de recouvrement (2) ainsi qu'au moins un élément d'écartement (3) pour le maintien espacé de l'élément de recouvrement (2) par rapport au rail conducteur (1), l'élément d'écartement (3) présentant au moins un élément d'encliquetage (31, 32), qui coopère avec au moins un élément de serrage (21, 22) de l'élément de recouvrement (2) en reliant ceux-ci, un élément de support (7) présentant une extrémité libre (5) qui recouvre le rail conducteur (1) et est disposée à distance de celui-ci, l'extrémité libre (5) de l'élément de support (7) étant disposée opposée au rail conducteur (1), l'élément d'écartement (3) étant formé par l'élément de support (7) relié à un élément de retenue (6, 6') par le biais d'une traverse (4, 9), l'élément d'écartement (3) présentant un dispositif de fixation (8), qui chevauche au moins une extrémité libre (23) de l'élément de recouvrement (2) et/ou le rail conducteur (1) tout en les fixant, ledit dispositif de fixation présentant une base (80) et coopérant avec l'élément d'écartement (3) par le biais d'au moins un élément de fixation (83, 84), le dispositif de fixation (8) présentant deux barrettes de fixation (81, 82) disposées opposées l'une à l'autre sur la base (80), le dispositif de fixation (8) présentant deux éléments de fixation (83, 84) disposés opposés l'un à l'autre sur les barrettes de fixation (81, 82), et qui viennent en prise par derrière en s'encliquetant dans au moins un orifice de réception (61) de l'élément de retenue (6, 6') de l'élément d'écartement (3), **caractérisé en ce que**
l'élément de retenue (6) présente une base (60) ainsi que deux orifices de réception (61) disposés l'un à côté de l'autre, **en ce que** deux barrettes de retenue (62) sont disposées sur le côté de l'élément de retenue (6) disposé opposé à la paroi latérale (93) de la traverse (9), **en ce que** la largeur des barrettes de fixation (81, 82) du dispositif de fixation (8) est sélectionnée de façon à correspondre approximativement à la distance entre la barrette de retenue (62) de l'élément de retenue (6, 6') et la paroi latérale (63) de la traverse (64) de l'élément d'écartement (3), et **en ce qu'**un des éléments de fixation (84) est réalisé sur l'une des barrettes de fixation (81, 82) sous la forme d'un crochet d'encliquetage.

2. Système de rail conducteur selon la revendication 1, **caractérisé en ce que** l'élément d'écartement (3), le dispositif de fixation (8) ainsi que l'élément de recouvrement (2) sont fabriqués dans des matériaux polymères et/ou thermodurcissables.

3. Système de rail conducteur selon l'une des revendications précédentes, **caractérisé en ce que** le dispositif de fixation (8) est réalisé de telle sorte que l'élément de fixation (83, 84) disposé sur la barrette de fixation (81, 82) est disposé à distance de la base (80).

4. Système de rail conducteur selon l'une des revendications précédentes, **caractérisé en ce qu'**un premier élément de fixation (83) est réalisé sur la première barrette de fixation (81) du dispositif de fixation (8) de façon à présenter une base (830), à l'extrémité libre de laquelle est respectivement disposée une inclinaison d'entrée (831, 832).

5. Système de rail conducteur selon l'une des revendications précédentes, **caractérisé en ce qu'**au moins un élément de support (7) présente une extrémité libre (5) recouvrant l'élément formant surface de glissement (11) du rail conducteur (1) et disposée à distance de celui-ci et **en ce que** l'extrémité libre (5) de l'élément de support (7) est disposée opposée à l'élément formant surface de glissement (11) du rail conducteur (1).

6. Système de rail conducteur selon l'une des revendications précédentes, **caractérisé en ce que** l'élément de serrage (21, 22) de l'élément de recouvrement (2) vient en prise par derrière en s'encliquetant dans au moins un élément d'encliquetage (31, 32) de l'élément d'écartement (3).

7. Système de rail conducteur selon l'une des revendications précédentes, **caractérisé en ce que** la traverse (4, 9) et/ou l'élément de support (7) est réalisé approximativement en forme de double T en section transversale.
